# EUROPEAN PATENT SPECIFICATION

(11) **EP 3 417 174 B1**
(45) Date of publication and mention of the grant of the patent: **01.04.2020**
(21) Application number: 16704239.9
(22) Date of filing: 15.02.2016
(51) Int. Cl.: F04D 13/06, F04D 29/62, F01P 5/10, F16B 7/04, F16B 21/18

(54) **AUTOMOTIVE ELECTRICAL COOLANT PUMP**
ELEKTRISCHE KRAFTFAHRZEUGKÜHLMITTELPUMPE
POMPE ÉLECTRIQUE À LIQUIDE DE REFROIDISSEMENT D'AUTOMOBILE

(43) Date of publication of application: 26.12.2018
(73) Proprietor: Pierburg Pump Technology GmbH, 41460 Neuss (DE)
(72) Inventor: ZACHER, Wolfgang, 04720 Döbeln (DE); FINDEISEN, Alexander, 04720 Döbeln (DE); PATZNER, Rene, 09337 Hohenstein-Ernstthal (DE); PORZ, Gerald, 09465 Sehmatal-Neudorf (DE)
(74) Representative: terpatent Patentanwälte ter Smitten Eberlein-Van Hoof Rütten Daubert
(86) International application number: PCT/EP2016/053111
(87) International publication number: WO 2017/140334

(56) References cited:
- EP-A1- 2 674 624
- EP-A2- 2 495 447
- WO-A2-00/17521

## Description

The invention refers to an automotive electrical coolant pump for pumping a cooling liquid in a coolant circuit of a car, for example for cooling the cars combustion engine.

The coolant pump is provided with a pump section comprising a pump wheel and with a motor section comprising a motor rotor and a motor stator. The producers of automotive coolant pumps generally provide cooling pumps for many different car manufacturers or engine manufacturers. The standard coolant pump type is the impeller pump which is provided with an axial coolant inlet and a tangential coolant outlet. The size of the coolant pump and the rotational angle of the tangential coolant outlet with respect to the fixation means of the coolant pump can vary from customer to customer. As a consequence, the producer of automotive coolant pumps must provide different variations of one coolant pump model with different rotational angles of the tangential coolant outlet.

EP 2 796 722 A1 discloses a coolant pump with a pump section housing separate from the motor section housing, wherein the two section housings are fixed to each other by a fixation bulge embraced by a bordering ring. The rotational position of the pump section housing can be varied with relatively little constructional efforts. However, the construction of the bordering ring is somehow bulging and requires a lot of circumferential space. Furthermore, in most cases such a fixation is unsuitable for more than a one-time closing procedure.

It is an object of the present invention to provide an automotive coolant pump with a simple, space-saving and inexpensive construction. Furthermore, the housings of the coolant pump should be suitable for arranging in different rotational angles to each other, and the fixation of the housings respectively should be suitable for being repeatedly closed and/or released.

This object is solved with a coolant pump with the features of claim 1.

The coolant pump is provided with a housing comprising at least two separate section housings, i.e. a pump section housing and a separate motor section housing which is fixed to the pump section housing. The pump section housing comprises a coolant inlet and a coolant outlet.

The fixation of the pump section housing at the motor section housing is provided by a fixation arrangement. The fixation arrangement is defined by at least two clamping protrusions protruding radially outwardly from one of the section housings, by at least two axial clamping tongues protruding axially from the other section housing, and by a separate locking ring. Preferably, the clamping protrusions protrude from the pump section housing and the clamping tongues protrude from the motor section housing. Of course, this arrangement can be defined vice versa.

The clamping protrusions and the clamping tongues define a circumferential clamping channel. In particular, the clamping channel is formed by the walls of the clamping protrusions and of the clamping tongues and is to be understood as a mechanical channel, like a circumferential slot, not as a fluidic channel. The clamping channel is defined primarily by axial and radial portions of the clamping protrusions and of the clamping tongues, wherein the portions respectively provide parts of the lateral wall of the clamping channel. Thus, the channel is formed section by section. The protrusions and the tongues can be arranged alternately in circumferential direction of the housings so that the channel can be lateral partly-open. In particular, the clamping channel is one-sided open, in particular in direction radial outward of the section housing. In order to minimize a clearance ratio, both the protrusion and the tongues can comprise an inclined wall so that the groove for the locking ring is formed V-shaped. Preferably, the clamping channel is arranged circumferentially in a plane which is vertical to the longitudinal axis of the pump.

The locking ring is arranged in the clamping channel and extends through the clamping channel circumferentially. As a consequence, the clamping protrusions and the clamping tongues are axial-oppositely engaged with the locking ring so that the locking ring can be forced by the clamping protrusions and by the clamping tongues in opposite axial directions. In particular, the clamping protrusions and the clamping tongues can embrace and engage axially behind the locking ring. Thus, the clamping protrusions and the clamping tongues can be braced and interlocked against each other by the locking ring so that the fixation arrangement defines a strong axial fixation of the pump section housing at the motor section housing.

The clamping protrusions and the clamping tongues are preferably made of the same material as the respective section housing is made of, in particular of plastic. The locking ring is preferably made of metal. In order to bring the locking ring in the fixation position, i.e. in order to pull the locking ring axially over the clamping protrusions, the locking ring is formed as an open ring and has a relative elastic structure, like a spring ring. Thus, the locking ring can be stretched radially without any permanent deformation.

The fixation arrangement generally allows to freely choose the rotational position of the pump section housing with respect to the motor section housing. The fixation arrangement is simple in construction, can be assembled in a relatively simple way and with relative large mechanical tolerances without lessen the stability of the fixation arrangement. Further, the fixation is suitable for being repeatedly closed and released.

For varying the rotational angle of the pump section housing with respect to the motor section housing, the pump section housing and the motor section housing can be preassembled, before bringing the section housings together in the desired rotational angle. One of the section housings can be hold, for example by a supporting tool, while the separate locking ring is pulled over the radial clamping protrusions of the section housing and put in circular line with the axial walls of the clamping protrusions. Then, a positioning tool can bring the other section housing, especially the clamping tongues of the other section housing, in a rotational position which is correspondingly to the arrangement of the clamping protrusions of the pump section housing, and can press the one section housing in axial direction towards the other section housing so that the clamping tongues click behind the locking ring and the motor section housing is fixed to the pump section housing.

With the present concept of a fixation arrangement a strong axial and rotational fixation of the pump section housing at the motor section housing can be provided, whereby production and preparation of the locking elements as well as of the supporting tools are simple and cost-effective. Also the final fixation step is simple, reliable and can be provided repeatedly and with the same machines and tools for different tangential fixation angles of the pump section housing with respect to the motor section housing and its mounting flanges.

According to a preferred embodiment, the pump section housing comprises a central axial coolant inlet and a tangential coolant outlet. The tangential coolant outlet has not to be strictly tangentially but continues the outlet volute which is typical for an impeller liquid pump. Thus, the coolant pump can be of a standard automotive coolant pump type, wherein the rotational angle of the tangential coolant outlet with respect to the fixation means of the coolant pump can be oriented for each customer individually and in a very simple way.

According to a preferred embodiment, an axial intermediate gap is provided between at least two adjacent clamping protrusions, and the clamping tongue engages through the intermediate gap. Depending on the configuration of the fixation arrangement, at least two axial intermediate gaps can be provided circumferentially. Preferably, the fixation arrangement is defined by six clamping protrusions and six clamping tongues so that preferably six axial intermediate gaps are provided circumferentially. Preferably, the clamping tongues extend through the intermediate gap with an axial portion in order to engage with the locking ring. As a consequence, the construction of the coolant pump can be relatively space-saving.

According to a preferred embodiment, the width of the intermediate gap corresponds to the width of the clamping tongue. As a consequence, the clamping protrusions and the clamping tongues can be arranged directly next to one another in circumferential direction so that a rotational movement of the pump section housing in respect to the motor section housing can be prevented.

According to a preferred embodiment, the clamping protrusions and the clamping tongues are arranged evenly-distributed around the circumference of the respective section housing. Preferably, the clamping protrusions and the clamping tongues are arranged to one another in an angle that corresponds to the quotient of 360 degree and the numbers of clamping tongues. For example, the fixation arrangement is defined by six clamping protrusions and six clamping tongues which are respectively arranged circumferentially in an angle of 60 degree to one another. As a consequence, the rotational position of the motor section housing with regard to the pump section housing can vary, and the pump section housing and the motor section housing can be simply positioned to each other in the desired rotational angle.

According to a preferred embodiment, the clamping protrusions and the clamping tongues are arranged alternately around the circumference of the fixation arrangement. As a consequence, the clamping tongues and the clamping protrusions can be positioned directly next to one another in circular direction so that a rotational fixation of the motor section housing at the pump section housing can be simply provided.

According to a preferred embodiment, the clamping tongues are provided with a clamping portion engaging axially behind the locking ring. This simplifies the construction of the fixation arrangement as well as the step of fixing the motor section housing at the pump section housing. After the clamping portion is engaged axially behind the locking ring, the locking ring is preloaded towards both axial directions so that the motor section housing is fixed to the pump section housing.

According to a preferred embodiment, the pump section housing is provided with a circumferential groove, and the locking ring is arranged in the groove. The groove can be defined by a depression and/or a corresponding enlargement arranged at the wall of the section housings circumferentially. The groove can be partly interrupted in circumferential direction. This arrangement simplifies the step of holding the locking ring in position during fixing the section housings to each another.

According to a preferred embodiment, a separate sealing arrangement is provided to provide a liquid tight sealing of the gap between the two section housings. The sealing arrangement is axially not overlapping with the fixation arrangement. In other words, the sealing arrangement and the fixation arrangement have no radial plane in common. The axial separation of the sealing arrangement from the fixation arrangement avoids negative mechanical impacts on the sealing arrangement caused by the locking process. Therefore, the liquid-tight sealing of the joint between the motor section housing and the pump section housing can be guaranteed even after the locking process.

According to a preferred embodiment of the invention, the proximal end of the pump section housing is provided with the clamping protrusions, and the distal end of the motor section housing is provided with the clamping tongues. Furthermore, a housing cover and/or a housing of a motor control section can be provided, and the respective cover and/or housing respectively can be fixed to the motor section housing or to the pump section housing by a second fixation arrangement which can be designed similar or identical to the fixation arrangement between the motor section housing and the pump section housing.

One embodiment of the invention is described with reference to the enclosed drawings, wherein
figure 1 shows a longitudinal section of an electrical automotive coolant pump with a motor section housing and a pump section housing which are fixed to each other by a fixation arrangement,
figure 2 shows a side view of the coolant pump of figure 1, and
figure 3 shows a front view of the coolant pump and of the pump section housing of figure 1.

The figures show an automotive electrical coolant pump 10 for pumping a liquid coolant, for example water, to an internal combustion engine of an automotive vehicle. The pump 10 is driven by an electric motor which is electronically commutated.

The pump 10 comprises, seen in axial direction, two lengthwise sections: a pump section 20 with a pump wheel 28, and a motor section 30 with a motor rotor 33, with a motor stator 32 and with an integrated electronic chamber 71 comprising an electronic motor control 70. The two sections 20, 30 are provided with a separate section housing respectively: a motor section housing 31 surrounding a ring-like stator cavity 36 with several motor stators 32, and a pump section housing 21 with an axial coolant inlet 22 and a tangential coolant outlet 23. The motor section housing 31 and the pump section housing 21 are preferably made of plastics.

The coolant flows through the coolant inlet 22 into the axial pump wheel inlet and is forced by the rotating pump wheel 28 radially outwardly into an outlet volute 23a from where the coolant leaves the pump 10 through the tangential coolant outlet 23. The pump wheel 28 is supported by a rotatable rotor shaft 60 which also supports the permanent magnetic motor rotor 33.

A fixation arrangement 40 is provided to fix the pump section housing 21 at the motor section housing 31. The fixation arrangement 40 is generally circular and is arranged at an axial proximal end 27 of the pump section housing 21 and an axial end 37 of the motor section housing 31 so that the section housings 21, 31 are fixed to each other in the axial direction of the pump 10. The fixation arrangement 40 is defined by six separate clamping protrusions 24 protruding radially outwardly from the pump section housing 21, by six axial clamping tongues 34 protruding axially from the motor section housing 31, and by a separate locking ring 41 which is engaged with the protrusions 24 and with the tongues 34.

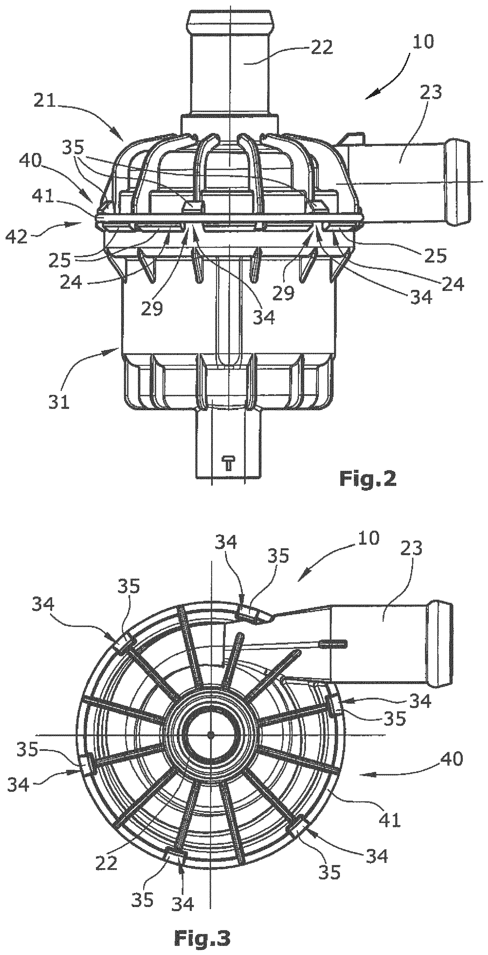

The clamping protrusions 24 of the pump section housing 21 are arranged evenly-distributed around the circumference of the section housings 21, 31, in particular arranged in an angle to each other of about 60 degree. Each clamping protrusion 24 provides a radial portion 25 with an axial contact surface for preloading in axial direction. As best seen in figure 2, the present clamping protrusion 24 is arranged in a block, wherein each block is provided with two separate radial portions 25. The clamping protrusion 24 and the radial portion 25 respectively are formed as a hook or as an undercut. An axial intermediate gap 29 is provided between two adjacent clamping protrusions 24 wherein the width of the intermediate gap 29 corresponds to the width of the clamping tongue 34.

The clamping tongues 34 of the motor section housing 31 are arranged evenly-distributed around the circumference of the section housings 21, 31, in particular arranged in an angle to each other of about 60 degree correspondingly to the intermediate gaps 29 of the clamping protrusions 24. In particular, the tongues 34 respectively comprise an axial portion which extends axially through the intermediate gap 29. The axial portion enables the tongue 34 to be elastic and flexible in radial direction. Furthermore, the clamping tongue 34 comprises a radial portion 35 with an axial contact surface for preloading in axial direction. As a consequence, the clamping tongue 34 and the radial portion 35 respectively is formed as a hook or as an undercut.

The protrusions 24 and the tongues 34 are arranged alternately and substantially parallel to each other in circumferential direction of the housings 21, 31. As a consequence, the protrusions 24 and the tongues 34 provide a clamping channel 42 in circumferential direction, in particular a clamping channel 42 which is formed as a lateral partly-open slot. The clamping channel 42 is formed mainly by a radial portion 25 of the clamping protrusion 24 and by a radial clamping portion 35 of the clamping tongue 34, wherein the portions 25, 35 respectively provide the lateral wall of the clamping channel 42 section by section. The clamping channel 42 is arranged circumferentially in a plane which is vertical to the longitudinal axis of the pump 10.

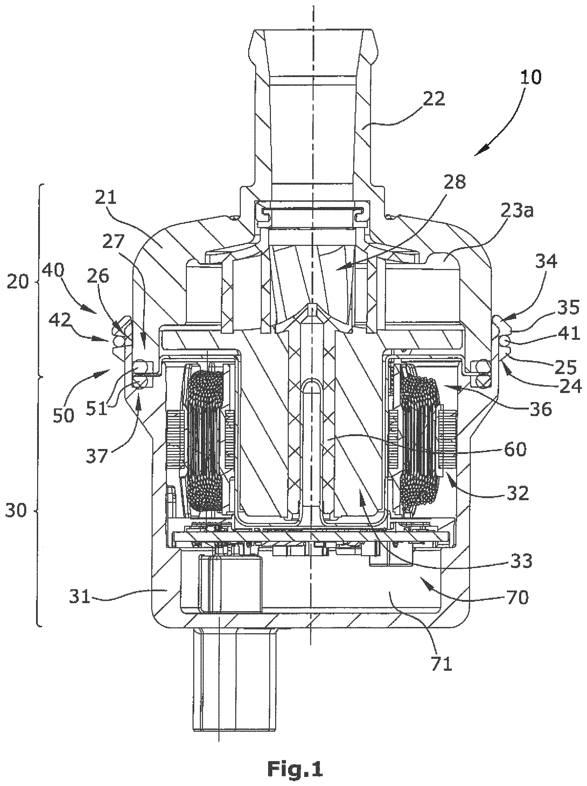

The locking ring 41 is arranged in the clamping channel 42 and extends through the clamping channel 42 circumferentially. The locking ring can be made of metal. In order to bring the locking ring in the fixation position, the locking ring is elastic and flexible and formed as an open ring. Thus, the locking ring 41 can be stretched radially without any permanent deformation. The locking ring 41 is provided at the axial end of the motor section housing 31 but not necessarily at the edge of the housing opening. In order to hold the locking ring 41 in a specific axial position the pump section housing 21 provides a circumferential groove 26 - shown in figure 1 with dotted lines. The groove 26 comprises a depression and an enlargement corresponding to the size of the locking ring 41. In particular, the groove 26 is formed by the axial wall of the pump section housing 21 and by the clamping protrusions 24. The locking ring 41 extends circumferentially through the groove 26.

The fixation arrangement 40 is assembled by pushing the locking ring 41 axially over the radial portion 25 of the clamping protrusions 24 into the groove 26. Then, axially shifting the motor section housing 31 onto the corresponding axial end 27 of the pump section housing 21 and pushing the clamping tongues 34 axially forward so that the clamping portion 35 of the clamping tongues 34 engage axially behind the fixation arrangement 40 and thereby fix the pump section housing 21 at the motor section housing 31 via preloading the locking ring 41. In particular, the clamping protrusions 24 as well as the clamping tongues 34 engage axially oppositely behind the locking ring 41 so that the clamping protrusions 24 and the clamping tongues 34 are fixed in axial direction. Then, the locking ring 41 is preloaded axially by the clamping protrusions 24 and by the clamping tongues 34. As a consequence, the fixation arrangement 40 is provided with the clamping protrusions 24 and with the clamping tongues 34 braced against each other by the locking ring 41.

In the fixation-free axial section of the cylindrical end section 37 of the motor section housing 31 a sealing arrangement 50 is provided defined by two separate circular flexible sealing rings 51 in the end section 27 of the pump section housing 21. Seen in axial direction, the sealing arrangement 50 is not overlapping with the fixation arrangement 40.

### References

- 10: coolant pump
- 20: pump section
- 21: pump section housing
- 22: coolant inlet
- 23: coolant outlet
- 23a: outlet volute
- 24: clamping protrusion
- 25: radial portion
- 26: groove
- 27: axial end
- 28: pump wheel
- 29: intermediate gap

- 30: motor section
- 31: motor section housing
- 32: motor stator
- 33: motor rotor
- 34: axial clamping tongue
- 35: radial clamping portion
- 36: stator cavity
- 37: axial end

- 40: fixation arrangement
- 41: locking ring
- 42: clamping channel

- 50: sealing arrangement
- 51: sealing ring

- 60: rotor shaft

- 70: motor control
- 71: electronics chamber

## Claims

1. An automotive electrical coolant pump (10) comprising
a pump section (20) with a pump wheel (28) and a motor section (30) with a motor rotor (33) and a motor stator (32),
a pump section housing (21) and a separate motor section housing (31) which is fixed to the pump section housing (21),
the pump section housing (21) comprises a coolant inlet (22) and a coolant outlet (23),
the fixation of the pump section housing (21) at the motor section housing (31) is provided by a fixation arrangement (40),
the fixation arrangement (40) is defined by
at least two separate clamping protrusions (24) protruding radially outwardly from one of the section housings (21, 31),
at least two axial clamping tongues (34) protruding axially from the other section housing (21, 31), and **characterized in that** the coolant pump further comprises a separate locking ring (41), wherein
the clamping protrusions (24) and the clamping tongues (34) define a circumferential clamping channel (42), and
the locking ring (41) is arranged in the clamping channel (42) and extends through the clamping channel (42) circumferentially so that the clamping protrusions (24) and the clamping tongues (34) are interlocked against each other by the locking ring (41).

2. The automotive electrical coolant pump (10) of claim 1, **wherein** the pump section housing (21) comprises an axial coolant inlet (22) and a tangential coolant outlet (23).

3. The automotive electrical coolant pump (10) of one of the preceding claims, **wherein** an axial intermediate gap (29) is provided between two adjacent clamping protrusions (24), and the clamping tongue (34) engages through the intermediate gap (29).

4. The automotive electrical coolant pump (10) of claim 3, **wherein** the width of the intermediate gap (29) corresponds to the width of the clamping tongue (34).

5. The automotive electrical coolant pump (10) of one of the preceding claims, **wherein** the clamping protrusions (24) and the clamping tongues (34) are arranged evenly-distributed around the circumference of the respective section housings (21, 31).

6. The automotive electrical coolant pump (10) of one of the preceding claims, **wherein** the clamping protrusions (24) and the clamping tongues (34) are arranged alternately in circumferential direction.

7. The automotive electrical coolant pump (10) of one of the preceding claims, **wherein** the clamping tongues (34) are provided with a clamping portion (35) engaging axially behind the locking ring (41).

8. The automotive electrical coolant pump (10) of one of the preceding claims, **wherein** the pump section housing (21) comprises a circumferential groove (26) and the locking ring (41) is arranged in the groove (26).

9. The automotive electrical coolant pump (10) of one of the preceding claims, **wherein** a separate sealing arrangement (50) is provided to provide a liquid-tight sealing and the sealing arrangement (50) is axially not overlapping with the fixation arrangement (40).

10. The automotive electrical coolant pump (10) of one of the preceding claims, **wherein** the proximal end (27) of the pump section housing (21) is provided with the clamping protrusions (24) and the distal end (37) of the motor section housing (31) is provided with the clamping tongues (34).

## Patentansprüche

1. Elektrische Kraftfahrzeugkühlmittelpumpe (10) mit
einem Pumpenabschnitt (20) mit einem Pumpenrad (28) und einem Motorabschnitt (30) mit einem Motorrotor (33) und einem Motorstator (32),
einem Pumpenabschnittgehäuse (21) und einem separaten Motorabschnittsgehäuse (31), das am Pumpenabschnittsgehäuse (21) befestigt ist,
wobei das Pumpenabschnittsgehäuse (21) einen Kühlmitteleinlass (22) und einen Kühlmittelauslass (23) aufweist,
wobei die Befestigung des Pumpenabschnittsgehäuses (21) am Motorabschnittsgehäuse (31) durch eine Befestigungsanordnung (40) ausgebildet ist,
wobei die Befestigungsanordnung (40) definiert ist durch
mindestens zwei separate Klemmvorsprünge (24), die von einem der Abschnittsgehäuse (21, 31) radial nach außen vorstehen,
mindestens zwei vorstehende Klemmzungen (34), die von dem anderen Abschnittsgehäuse (21, 31) axial vorstehen und
**dadurch gekennzeichnet, dass** die Kühlpumpe ferner aufweist:
einen separaten Verriegelungsring (41), wobei
die Klemmvorsprünge (24) und die Klemmzungen (34) einen umlaufenden Klemmkanal (42) bilden, und
der Verriegelungsring (41) in dem Klemmkanal (42) angeordnet ist und sich umfangsmäßig durch den Klemmkanal (42) erstreckt, so dass die Klemmvorsprünge (24) und die Klemmzungen (34) durch den Klemmring (41) gegeneinander verriegelt sind.

2. Elektrische Kraftfahrzeugkühlmittelpumpe (10) nach Anspruch 1, bei welcher das Pumpenabschnittsgehäuse (21) einen axialen Kühlmitteleinlass (22) und einen tangentialen Kühlmittelauslass (23) aufweist.

3. Elektrische Kraftfahrzeugkühlmittelpumpe (10) nach einem der vorhergehenden Ansprüche, bei welcher zwischen zwei benachbarten Dämpfungsvorsprüngen (24) ein axialer Zwischenraum (29) vorgesehen ist und die Klemmzunge (34) den Zwischenraum (29) durchgreift.

4. Elektrische Kraftfahrzeugkühlmittelpumpe (10) nach Anspruch 3, bei welcher die Breite des Zwischenraums (29) der Breite der Klemmzunge (34) entspricht.

5. Elektrische Kraftfahrzeugkühlmittelpumpe (10) nach einem der vorhergehenden Ansprüche, bei welcher die Klemmvorsprünge (24) und die Klemmzungen (34) gleichmäßig um den Umfang der jeweiligen Abschnittsgehäuse (21, 31) verteilt angeordnet sind.

6. Elektrische Kraftfahrzeugkühlmittelpumpe (10) nach einem der vorhergehenden Ansprüche, bei welcher die Klemmvorsprünge (24) und die Klemmzungen (34) in Umfangsrichtung abwechselnd angeordnet sind.

7. Elektrische Kraftfahrzeugkühlmittelpumpe (10) nach einem der vorhergehenden Ansprüche, bei welcher die Klemmzungen (34) mit einem Klemmbereich (35) versehen sind, der den Verriegelungsring (41) axial hintergreift.

8. Elektrische Kraftfahrzeugkühlmittelpumpe (10) nach einem der vorhergehenden Ansprüche, bei welcher das Pumpenabschnittsgehäuse (21) eine Umfangsnut (26) aufweist und der Verriegelungsring (41) in der Nut (26) angeordnet ist.

9. Elektrische Kraftfahrzeugkühlmittelpumpe (10) nach einem der vorhergehenden Ansprüche, bei welcher eine separate Dichtungsanordnung (50) zum Bereitstellen einer flüssigkeitsdichten Abdichtung vorgesehen ist, und die Dichtungsanordnung (50) die Befestigungsanordnung (40) axial nicht überlappt.

10. Elektrische Kraftfahrzeugkühlmittelpumpe (10) nach einem der vorhergehenden Ansprüche, bei welcher das proximale Ende (27) des Pumpenabschnittsgehäuses (21) mit den Klemmvorsprüngen (24) versehen ist und das distale Ende (37) des Motorabschnittsgehäuses (31) ist mit den Klemmzungen (34) versehen ist.

## Revendications

1. Pompe à liquide de refroidissement électrique (10) pour automobiles, comportant
une section de pompe (20) avec une roue de pompe (28) et une section de moteur (30) avec un rotor de moteur (33) et un stator de moteur (32),
un carter de section de pompe (21) et un carter de section de moteur (31) séparé qui est fixé au carter de section de pompe (21),
le carter de section de pompe (21) comprend une entrée de liquide de refroidissement (22) et une sortie de liquide de refroidissement (23),
la fixation du carter de section de pompe (21) au carter de section de moteur (31) est formée par un ensemble de fixation (40),
l'ensemble de fixation (40) étant défini par
au moins deux saillies de serrage séparées (24) faisant saillie radialement vers l'extérieur de l'un des carters de section (21, 31),
au moins deux languettes de serrage axiales (34) faisant saillie axialement de l'autre carter de section (21, 31) et
**caractérisée en ce que** la pompe à liquide de refroidissement comprend en outre
un anneau de verrouillage séparé (41), dans lequel
les saillies de serrage (24) et les languettes de serrage (34) définissent un canal de serrage circonférentiel (42) et
l'anneau de verrouillage (41) est disposé dans le canal de serrage (42) et s'étend circonférentiellement à travers le canal de serrage (42), de sorte que les saillies de serrage (24) et les languettes de serrage (34) soient verrouillées l'une contre l'autre par l'anneau de serrage (41).

2. Pompe à liquide de refroidissement électrique (10) pour automobiles selon la revendication 1, dans laquelle le carter de section de pompe (21) comporte une entrée axiale de liquide de refroidissement (22) et une sortie tangentielle de liquide de refroidissement (23).

3. Pompe à liquide de refroidissement électrique (10) pour automobiles selon l'une quelconque des revendications précédentes, dans laquelle une fente intermédiaire axiale (29) est prévue entre deux saillies de serrage adjacentes (24), et la languette de serrage (34) s'engage à travers la fente intermédiaire (29).

4. Pompe à liquide de refroidissement électrique (10) pour automobiles selon la revendication 3, dans laquelle la largeur de la fente intermédiaire (29) correspond à la largeur de la languette de serrage (34).

5. Pompe à liquide de refroidissement électrique (10) pour automobiles selon l'une quelconque des revendications précédentes, dans laquelle les saillies de serrage (24) et les languettes de serrage (34) sont disposées de manière uniforme autour de la circonférence des carters de section respectifs (21, 31).

6. Pompe à liquide de refroidissement électrique (10) pour automobiles selon l'une quelconque des revendications précédentes, dans laquelle les saillies de serrage (24) et les languettes de serrage (34) sont disposées en alternance dans la direction circonférentielle.

7. Pompe à liquide de refroidissement électrique (10) pour automobiles selon l'une quelconque des revendications précédentes, dans laquelle les languettes de serrage (34) sont pourvues d'une partie de serrage (35) s'engageant axialement derrière l'anneau de verrouillage (41).

8. Pompe à liquide de refroidissement électrique (10) pour automobiles selon l'une quelconque des revendications précédentes, dans laquelle le carter de section de pompe (21) comprend une rainure circonférentielle (26) et l'anneau de verrouillage (41) est disposée dans la rainure (26).

9. Pompe à liquide de refroidissement électrique (10) pour automobiles selon l'une quelconque des revendications précédentes, dans laquelle un ensemble d'étanchéité séparé (50) est prévu pour assurer une étanchéité aux liquides et l'ensemble d'étanchéité (50) ne chevauche pas axialement avec l'ensemble de fixation (40).

10. Pompe à liquide de refroidissement électrique (10) pour automobiles selon l'une quelconque des revendications précédentes, dans laquelle l'extrémité proximale (27) du carter de section de pompe (21) est munie des saillies de serrage (24) et l'extrémité distale (37) du carter de section de moteur (31) est pourvu des languettes de serrage (34).
